# EUROPÄISCHE PATENTSCHRIFT

(11) **EP 1 420 205 B1**
(45) Veröffentlichungstag und Bekanntmachung des Hinweises auf die Patenterteilung: **13.06.2012**
(21) Anmeldenummer: 03025366.0
(22) Anmeldetag: 04.11.2003
(51) Int. Cl.: F23D 3/40, F23Q 7/08, B60H 1/22, F23D 11/44

(54) **Verdampferbrenner, insbesondere für ein Fahrzeugheizgerät**
Vaporising burner, in particular for a vehicle heating device
Brûleur à vaporisation, notamment pour un dispositif de chauffage pour un vèhicule

(30) Priorität: 05.11.2002 DE 10251438
(43) Veröffentlichungstag der Anmeldung: 19.05.2004
(73) Patentinhaber: J. Eberspächer GmbH & Co. KG, 73730 Esslingen (DE)
(72) Erfinder: Krämer, Michael, 70193 Stuttgart (DE); Blaschke, Walter, 73779 Deizisau (DE)
(74) Vertreter: Ruttensperger, Bernhard

(56) Entgegenhaltungen:
- DE-A1- 3 233 319
- DE-A1- 3 318 417
- DE-A1- 3 607 574
- US-A- 4 789 331
- US-A- 5 722 588
- US-A1- 2001 035 463
- PATENT ABSTRACTS OF JAPAN Bd. 010, Nr. 193 (M-496), 8. Juli 1986 (1986-07-08) & JP 61 038318 A (MATSUSHITA ELECTRIC IND CO LTD), 24. Februar 1986 (1986-02-24)

## Beschreibung

Die vorliegende Erfindung betrifft einen Verdampferbrenner, insbesondere für ein Fahrzeugheizgerät, umfassend ein Brennkammergehäuse und in dem Brennkammergehäuse ein Verdampfermedium zur Aufnahme von flüssigem Brennstoff und zur Abgabe von Brennstoffdampf in eine Brennkammer, gemäß dem Oberbegriff des Anspruchs 1.

Aus der DE 32 33 319 A1 ist ein Verdampferbrenner bekannt, bei welchem an einem Bodenbereich eines im Wesentlichen topfartig ausgebildeten Brennkammergehäuses eine Lage aus porösem, vliesartigem Verdampfermedium angeordnet ist. Eine Brennstoffzuführleitung speist flüssigen Brennstoff in dieses Verdampfermedium ein. Der Brennstoff verteilt sich durch Kapillarwirkung in diesem Verdampfermedium und gelangt auf diese Art und Weise auch auf die der Brennkammer zugewandte Seite des Verdampfermediums. An dieser Seite des Verdampfermediums ist eine Glühzündeinrichtung in Form einer Heizwendel vorgesehen, die beispielsweise eine kreisringartige, spiralartige, sternartige oder geradlinig sich erstreckende Konfiguration aufweisen kann. Zum Starten der Verbrennung wird diese Wendel bestromt, so dass an der der Brennkammer zugewandten Seite des Verdampfermediums ausreichend hohe Temperaturen erzeugt werden, um das dort vorhandene Luft/Brennstoff-Gemisch zu zünden. Nach dem Starten der Verbrennung wird die Erregung dieser Heizwendel eingestellt.

Die US 4789331 A offenbart einen Verdampferbrenner gemäß dem Oberbegriff des Anspruchs 1, bei welchem ein Zündorgan mit dem zum Zünden aktiven, also erwärmbaren Bereich sich axial durch einen Bodenbereich hindurch erstreckt und damit auch ein in diesem Bodenbereich vorgesehenes poröses Verdampfermedium durchsetzt.

Die DE 3318417 A1 offenbart einen Ölgebläsebrenner, bei welchem Öl durch einen zwischen zwei Wänden gebildeten Spalt geführt wird, um dort zu verdampfen. Eine der beiden Wände dient dabei zugleich als hintere Brennraumbegrenzung und ist feststehend angeordnet. Sie kann zunächst durch elektrische Heizelemente und bei laufendem Brenner durch die Brennerflamme beheizt werden. Die andere der beiden Wände ist eine rotierende Wand.

Es ist Aufgabe der vorliegenden Erfindung, einen Verdampferbrenner bereitzustellen, welcher bei vereinfachtem Aufbau einen effizienten Betrieb insbesondere in der Startphase sicherstellt.

Erfindungsgemäß wird diese Aufgabe durch einen Verdampferbrenner der eingangs genannten Art gelöst, welcher zudem noch die Merkmale gemäß dem kennzeichnenden Teil des Anspruchs 1 aufweist.

Die bei dem erfindungsgemäßen Verdampferbrenner vorgesehene Heizwendelanordnung erfüllt zwei Funktionen. Zum einen dient sie dazu, das Verdampfermedium zu erwärmen, insbesondere in der Startphase auch effizient vorzuwärmen, und dient weiterhin dazu, in der Startphase die Zündung des in einer Brennkammer vorhandenen Luft/Brennstoff-Gemisches auszulösen. Da die Heizwendelanordnung in wesentlichen Bereichen derselben außerhalb der Brennkammer positioniert ist, also an der Rückseite des Verdampfermediums positioniert ist, wird bei gleichwohl guter Erwärmung des Verdampfermediums und des darin enthaltenen flüssigen Brennstoffs zum Abdampfen desselben dieses Abdampfen nicht durch irgendwelche an der der Brennkammer zugewandten Seite des Verdampfermediums vorhandene Komponenten behindert. Hier ragt lediglich ein vergleichsweise kurzer und dem Erzeugen lokal hoher Temperaturen dienender Bereich der Heizwendelanordnung in die Brennkammer, um die Zündung auszulösen.

Um einen sehr effizienten Wärmeübertrag auf das Verdampfermedium erlangen zu können, wird vorgeschlagen, dass der Heizbereich an einer Oberfläche des Verdampfermediums anliegend angeordnet ist. Alternativ oder darüber hinausgehend kann ein guter Wärmeübertragungskontakt dadurch erlangt werden, dass der Heizbereich wenigstens teilweise in das Verdampfermedium eingebettet ist.

In dem Verdampfermedium kann eine Durchgriffsöffnung für den Zündbereich der Heizwendelanordnung vorgesehen sein.

Der erfindungsgemäße Verdampferbrenner kann derart aufgebaut sein, dass das Verdampfermedium an einem Bodenbereich des Brennkammergehäuses angeordnet ist und dass der Heizbereich der Heizwendelanordnung zwischen dem Bodenbereich und dem Verdampfermedium angeordnet ist. Dabei kann der Zündbereich im Wesentlichen orthogonal zum Heizbereich angeordnet sein und kann einen in der Brennkammer sich im Wesentlichen U-förmig erstreckenden Heizleiterabschnitt aufweisen.

Die Erfindung betrifft ferner ein Heizgerät, insbesondere für ein Fahrzeug, welches einen erfindungsgemäßen Verdampferbrenner aufweist.

Nachfolgend wird die vorliegende Erfindung mit Bezug auf die beiliegenden Zeichnungen beschrieben. Es zeigt:
- Fig. 1: eine vereinfachte perspektivische Darstellung eines Ver- dampferbrenners;
- Fig. 2: eine Längsschnittansicht des in Fig. 1 dargestellten Ver- dampferbrenners.

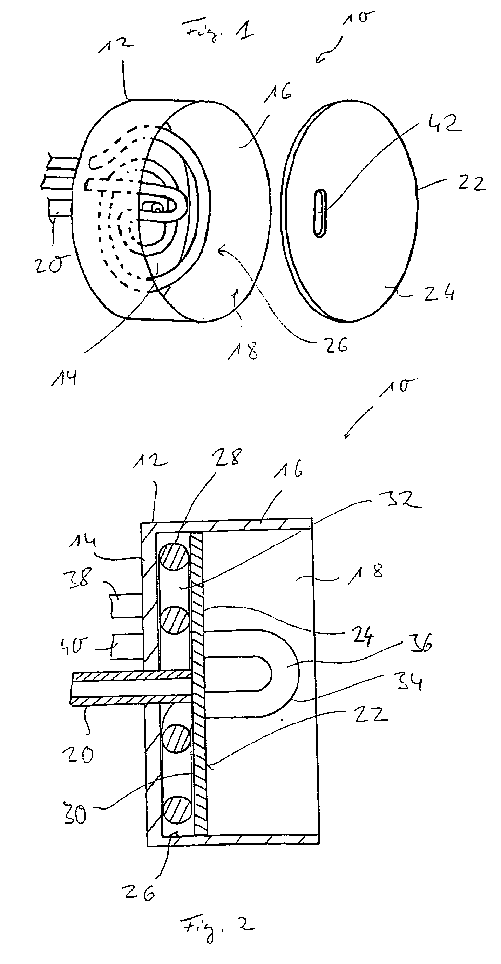

In den Fig. 1 und 2 ist ein erfindungsgemäßer Verdampferbrenner allgemein mit 10 bezeichnet. Der Verdampferbrenner 10 umfasst ein Brennkammergehäuse 12, das im dargestellten Beispiel im Wesentlichen topfartig aufgebaut ist und einen Bodenbereich 14 und eine Umfangswandung 16 aufweist. Dieses Brennkammergehäuse 12 begrenzt mit seinem Bodenbereich 14 und der Umfangswandung 16 eine allgemein mit 18 bezeichnete Brennkammer zumindest zum Teil. Über eine in den Bodenbereich 14 zentral einmündende Brennstoffzuführleitung 20 wird flüssiger Brennstoff zugeführt. Parallel zum Bodenbereich 14 ist ein in seiner Formgebung an die im dargestellten Beispiel kreisrunde Formgebung des Bodenbereichs 14 angepasstes Verdampfermedium 22 angeordnet. Das Verdampfermedium 22, welches aus porösem und Flüssigkeit unter Kapillarwirkung förderndem Material aufgebaut ist, wie z.B. Vliesmaterial, Geflechtmaterial, Gespinstmaterial, Gewebe, Schaummaterial u. dgl., nimmt den flüssigen Brennstoff von der Brennstoffzuführleitung 20 auf. Durch die bereits angesprochene Kapillarwirkung verteilt sich der Brennstoff in dem Verdampfermedium 22 und gelangt dabei auch an die der Brennkammer 18 zugewandte Seite 24 desselben.

Eine allgemein mit 26 bezeichnete Heizwendelanordnung hat bei dem erfindungsgemäßen Verdampferbrenner 10 zwei wesentliche Funktionen. Zum einen dient sie dazu, das Verdampfermedium 22 und den darin enthaltenen flüssigen Brennstoff zu erwärmen, um die Abdampfungsrate, mit welcher Brennstoff aus dem Verdampfermedium 22 in dampfartiger Form in die Brennkammer 18 eintritt, zu erhöhen. Zum anderen dient die Heizwendelanordnung 26 dazu, ein in der Brennkammer 18 gebildetes Gemisch aus Verbrennungsluft und Brennstoffdampf am Beginn des Brennerbetriebs zu zünden und somit die Verbrennung zu starten. Diese Verbrennungsluft kann beispielsweise über verschiedene in der Umfangswandung 16 vorgesehene Verbrennungslufteintrittsöffnungen zugeleitet werden.

Man erkennt in den Figuren, dass die Heizwendelanordnung 26 einen Heizbereich 28 aufweist. Der Heizbereich 28 ist an der von der Heizkammer 18 abgewandt liegenden Seite 30 des Verdampfermediums 22 anliegend ausgebildet und umfasst im dargestellten Beispiel einen spiral- oder windungsartig sich erstreckenden Heizleiterabschnitt 32. Dieser Heizleiterabschnitt 32 liegt somit im Wesentlichen in einer zum Verdampfermedium 22 parallel orientierten Ebene.

Ferner umfasst die Heizwendelanordnung 26 einen Zündbereich 34. Dieser erstreckt sich aus der Ebene, in welcher der Heizbereich 28 liegt, heraus und ist im Wesentlichen orthogonal zum Heizbereich 28 orientiert. Der Zündbereich 34 umfasst einen in die Brennkammer 18 sich erstreckenden Heizleiterabschnitt 36 mit im Wesentlichen U-förmigem Verlauf, der an den Heizleiterabschnitt 32 des Heizbereichs 28 anschließt. Dies bedeutet, dass, wie vor allem auch in Fig. 1 erkennbar, der Heizleiterabschnitt 32 des Heizbereichs 28 in den Heizleiterabschnitt 36 des Zündbereichs 34 übergeht. Zur elektrischen Kontaktierung sind dann diese beiden Heizleiterabschnitte 32, 36 mit jeweiligen Anschlussenden 38, 40 durch den Bodenbereich 14 hindurchgeführt bzw. sind an entsprechende den Bodenbereich 14 durchsetzende Anschlussleitungen angeschlossen.

Im Verdampfermedium 24 ist eine schlitzartige Aussparung 42 vorgesehen, welche bei in dem Brennkammergehäuse 12 positioniertem Verdampfermedium 22 der Heizbereich 34 der Heizwendelanordnung 26 durchsetzt. Die Heizwendelanordnung 26 erstreckt sich somit im Übergang zwischen dem Heizbereich 28 und dem Zündbereich 34 über das Verdampfermedium 22 hinweg bzw. durch die Aussparung 42 in diesem hindurch.

Durch die Positionierung des Heizbereichs 28 an der von der Brennkammer 18 abgewandten Seite 30 des Verdampfermediums 22 ist dafür gesorgt, dass bei gleichwohl erhaltenem gutem Wärmeübertragungskontakt die Verdampfung von Brennstoff an der der Brennkammer 18 zugewandten Seite 24 des Verdampfermediums 22 nicht durch lokales Abdecken von Oberflächenbereichen behindert ist. Da gleichwohl der Zündbereich 34 sich in die Brennkammer 18 erstreckt, kann bei Erregung der Heizwendelanordnung 26 dafür gesorgt werden, dass nicht nur das Verdampfermedium 22 in erforderlichem Ausmaß erwärmt bzw. vorerwärmt wird, sondern dass auch lokal im Bereich der Brennkammer 18 so hohe Temperaturen generiert werden, dass das dort vorhandene Luft/Brennstoff-Gemisch zur Zündung gebracht wird. Nach erfolgter Zündung kann beispielsweise bei vergleichsweise niedrigen Außentemperaturen zur Vorerwärmung des Brennstoffs ggf. die Heizwendelanordnung 26 weiter bestromt werden, wenn auch mit geringerer Leistung als in der Startphase.

Es ist selbstverständlich, dass die vorangehend beschriebene Anordnung in verschiedensten Bereichen abgeändert werden kann. So kann selbstverständlich die Heizwendelanordnung 26 sowohl im Heizbereich 28 als auch im Zündbereich 34 einen anderen Verlauf der Heizleiterabschnitte 32 bzw. 36 aufweisen. Grundsätzlich sollte dafür gesorgt werden, dass insbesondere der Heizbereich 28 dazu in der Lage ist, das Verdampfermedium 22 so gleichmäßig als möglich zu erwärmen, um eine möglichst gleichmäßig verteilte Abdampfung des Brennstoffs erlangen zu können. Selbstverständlich ist es auch möglich, in dem Brennkammergehäuse 12 eine im Bodenbereich 14 zentral vorgesehene Verbrennungslufteinführanordnung bereitzuhalten, um welche herum dann das Verdampfermedium 22 und damit auch der Heizbereich 28 der Heizwendelanordnung 26 ringartig angeordnet werden können. Obgleich die in den Figuren dargestellte Ausgestaltungsform eine sehr platzsparende Anordnung ist, kann grundsätzlich auch daran gedacht werden, mit dem Verdampfermedium 22 alternativ oder zusätzlich auch die Umfangswandung 16 auszukleiden und dann zwischen dieser Umfangswandung 16 und dem zylinderartig ausgebildeten Verdampfermedium den Heizbereich der Heizwendelanordnung anzuordnen. Weiter ist es zur Verbesserung des Wärmeübertragungskontakts zwischen dem Heizbereich 28 und dem Verdampfermedium 22 denkbar, den Heizleiterabschnitt 32 des Heizbereichs 28 zumindest lokal in das Verdampfermedium 22 einzubetten. Um die Wärmeverluste nach außen hin zu minimieren, kann zwischen dem Bodenbereich 14 und dem Heizbereich 28 wärmeisolierendes Material angeordnet werden.

Mit der erfindungsgemäßen Anordnung kann dieselbe Funktion erzielt werden, wie sie ansonsten durch das Bereitstellen eines separaten Glühzündorgans realisiert wird, so dass bei einfachem Aufbau auch die Anzahl der zur Verfügung zu stellenden Bauteile verringert werden kann. Weiter wird durch das Anordnen eines wesentlichen Teils der Heizwendelanordnung außerhalb der Brennkammer 18 dafür gesorgt, dass diese weniger den im Verbrennungsbetrieb auftretenden sehr hohen Temperaturen ausgesetzt ist und somit einem geringeren Verschleiß unterliegt.

## Patentansprüche

1. Verdampferbrenner, insbesondere für ein Fahrzeugheizgerät, umfassend ein Brennkammergehäuse (12), in dem Brennkammergehäuse (12) ein Verdampfermedium (22) zur Aufnahme von flüssigem Brennstoff und zur Abgabe von Brennstoffdampf in eine Brennkammer (18), sowie eine Heizwendelanordnung (26) zum Erwärmen des Verdampfermediums (22), wobei die Heizwendelanordnung (26) einen Heizbereich (28) und einen sich in die Brennkammer (18) erstreckenden Zündbereich (34) umfasst,
**dadurch gekennzeichnet, dass** der Heizbereich (28) sich an einer von der Brennkammer (18) abgewandten Seite (30) des Verdampfermediums (22) entlang der von der Brennkammer (18) abgewandten Seite (30) des Verdampfermediums (22) erstreckt, und dass der Zündbereich (34) sich vom Heizbereich (28) abstehend über das Verdampfermedium (22) hinweg in die Brennkammer (18) erstreckt.

2. Verdampferbrenner nach Anspruch 1,
**dadurch gekennzeichnet, dass** der Heizbereich (28) an einer Oberfläche (30) des Verdampfermediums anliegend angeordnet ist.

3. Verdampferbrenner nach Anspruch 1 oder 2,
**dadurch gekennzeichnet, dass** der Heizbereich (28) wenigstens teilweise in das Verdampfermedium (22) eingebettet ist.

4. Verdampferbrenner nach einem der Ansprüche 1 bis 3,
**dadurch gekennzeichnet, dass** der Zündbereich (34) eine Durchgriffsöffnung (42) in dem Verdampfermedium (22) durchsetzt.

5. Verdampferbrenner nach einem der Ansprüche 1 bis 4,
**dadurch gekennzeichnet, dass** das Verdampfermedium (22) an einem Bodenbereich (14) des Brennkammergehäuses (12) angeordnet ist und dass der Heizbereich (28) der Heizwendelanordnung (26) zwischen dem Bodenbereich (14) und dem Verdampfermedium (22) angeordnet ist.

6. Verdampferbrenner nach einem der Ansprüche 1 bis 5,
**dadurch gekennzeichnet, dass** der Zündbereich (34) im Wesentlichen orthogonal zum Heizbereich (28) sich erstreckend angeordnet ist.

7. Verdampferbrenner nach einem der Ansprüche 1 bis 6,
**dadurch gekennzeichnet, dass** der Zündbereich (34) in der Brennkammer (18) einen im Wesentlichen U-förmig sich erstreckenden Heizleiterabschnitt (36) umfasst.

8. Heizgerät, insbesondere für ein Fahrzeug, umfassend einen Verdampferbrenner (10) nach einem der vorangehenden Ansprüche.

## Claims

1. Evaporative burner, in particular for a vehicle heating device, comprising a combustion chamber housing (12) and, in the combustion chamber housing (12), an evaporative medium (22) for receiving liquid fuel and for delivering fuel vapor into a combustion chamber (18), as well as a heating coil arrangement (26) for heating the evaporative medium (22), said heating coil arrangement (26) comprising a heating region (28) and an ignition region (34) extending into said combustion chamber (18), **characterized by** the heating region (28) extending on a side (30) of the evaporative medium (22) facing away from the combustion chamber (18) along that side (30) of the evaporative medium (22) facing away from the combustion chamber (18), and by the ignition region (34) protruding from the heating area (28) and extending over the evaporative medium (22) into the combustion chamber (18).

2. Evaporative burner according to claim 1,
**characterized in that** the heating region (28) is arranged abutting on a surface (30) of the evaporative medium.

3. Evaporative burner according to claim 1 or 2,
**characterized in that** the heating region (28) is at least partially embedded in the evaporative medium (22).

4. Evaporative burner according to one of claims 1 to 3,
**characterized in that** the ignition region (34) passes through a through passage opening (42) in the evaporative medium (22).

5. Evaporative burner according to one of claims 1 to 4,
**characterized in that** the evaporative medium (22) is arranged on a floor region (14) of the combustion chamber housing (12), and wherein the heating region (28) of the heating coil arrangement (26) is arranged between the floor region (14) and the evaporative medium (22).

6. Evaporative burner according to one of claims 1 to 5,
**characterized in that** the ignition region (34) is arranged extending substantially orthogonally of the heating region (28).

7. Evaporative burner according to one of claims 1 to 6,
**characterized in that** the ignition region (34) in the combustion chamber (18) comprises a heating conductor section (36) extending substantially in a U-shape.

8. Heating device, in particular for a vehicle, comprising an evaporative burner (10) according to one of the preceding claims.

## Revendications

1. Brûleur d'évaporation, en particulier pour un dispositif de chauffage de véhicule, comprenant un boîtier de chambre de combustion (12), dans le boîtier de chambre de combustion (12) un médium d'évaporation (22) pour recevoir du combustible liquide et pour délivrer de la vapeur de combustible envers une chambre de combustion (18), ainsi qu'un arrangement de bobine de chauffage (26) pour chauffer le médium d'évaporation (22), l'arrangement de bobine de chauffage (26) comprenant une région de chauffage (28) et une région d'allumage (34) s'étendant dans la chambre de combustion (18),
**caractérisé par** la région de chauffage (28) s'étendant à un côté (30) opposé à la chambre de combustion (18) du médium d'évaporation (22) le long du côté (30) opposé à la chambre de combustion (18) du médium d'évaporation (22) et par la région d'allumage (34) dépassant le médium d'évaporation (22) et s'étendant dans la chambre de combustion (18) en sailli de la région de chauffage (28).

2. Brûleur d'évaporation selon la revendication 1,
**caractérisé par** la région de chauffage (28) étant arrangée en butée contre une surface (30) du médium d'évaporation.

3. Brûleur d'évaporation selon la revendication 1 ou 2,
**caractérisé par** la région de chauffage (28) étant au moins partiellement incorporée dans le médium d'évaporation (22).

4. Brûleur d'évaporation selon une des revendication 1 à 3,
**caractérisé par** la région d'allumage (34) passant par une ouverture de passage (42) dans le médium d'évaporation (22).

5. Brûleur d'évaporation selon une des revendication 1 à 4,
**caractérisé par** le médium d'évaporation (22) étant arrangé à une région de fond (14) du boîtier de chambre de combustion (12) et par la région de chauffage (28) de l'arrangement de bobine de chauffage (26) étant arrangée entre la région de fond (14) et le médium d'évaporation (22).

6. Brûleur d'évaporation selon une des revendication 1 à 5,
**caractérisé par** la région d'allumage (34) étant arrangée substantiellement en s'étendant perpendiculairement à la région de chauffage (28).

7. Brûleur d'évaporation selon une des revendication 1 à 6,
**caractérisé par** la région d'allumage (34) comprenant dans la chambre de combustion (18) une section de conducteur de chauffage (36) s'étendant substantiellement en forme de U.

8. Dispositif de chauffage, en particulier pour un véhicule, comprenant un brûleur d'évaporation (10) selon une des revendications précédentes.
